# FASCICULE DE BREVET EUROPEEN

(11) **EP 1 617 177 B1**
(45) Date de publication et mention de la délivrance du brevet: **26.03.2008**
(21) Numéro de dépôt: 04103344.0
(22) Date de dépôt: 13.07.2004
(51) Int. Cl.: G01C 13/00, G04G 1/00, G04B 47/06

(54) **Procédé de détection du début d'une plongée pour ordinateur de plongée**
Verfahren zur Detektion des Tauchbeginnes für einen Tauchcomputer
Method of detecting the beginning of a dive for a dive computer

(43) Date de publication de la demande: 18.01.2006
(73) Titulaire: ETA SA Manufacture Horlogère Suisse, 2540 Grenchen (CH)
(72) Inventeur: Claude, Stéphane, 2540, Grenchen (CH)
(74) Mandataire: Ravenel, Thierry Gérard Louis

(56) Documents cités:
- EP-A- 0 682 301
- EP-A- 0 689 109

## Description

### DOMAINE TECHNIQUE

La présente invention concerne un procédé de détection du début d'une plongée destiné à être mis en oeuvre dans un dispositif électronique portable du type ordinateur de plongée. Plus précisément, le procédé est destiné à être mis en oeuvre dans un tel dispositif présentant au moins un premier mode de fonctionnement et un second mode de fonctionnement, dit mode plongée. Ce dispositif comporte notamment un capteur de pression pour mesurer la valeur de la pression environnante ainsi que des circuits électroniques de traitement des résultats des mesures de pression comprenant une base de temps et au moins une zone mémoire.

Le procédé de détection selon la présente invention est notamment basé sur l'étude des variations de la pression environnante en fonction du temps pour détecter le début d'une plongée entraînant une augmentation notable de la valeur de la pression environnante.

La présente invention concerne également un dispositif électronique portable spécialement adapté pour la mise en oeuvre du procédé mentionné ci-dessus.

### ARRIÈRE-PLAN TECHNOLOGIQUE

De tels procédés pour détecter le début d'une plongée en utilisant divers principes physiques sont connus de l'art antérieur.

Le brevet EP 0 689 109, délivré au nom de CITIZEN WATCH CO. LTD. le 16 décembre 1998, décrit un tel type de procédé ainsi qu'un dispositif électronique portable pour sa mise en oeuvre. En particulier, ce dispositif est muni de moyens spécifiques agencés pour détecter une entrée en contact du dispositif avec de l'eau, ainsi que d'un capteur de pression, agencé pour mesurer la valeur de la pression environnante. Ce brevet prévoit que le capteur de pression est alimenté, dans un premier mode de fonctionnement, de manière à effectuer une mesure de la pression atmosphérique environ une fois par heure pour mémoriser la valeur ainsi obtenue en tant que valeur de la pression de référence. En outre, les moyens spécifiques de détection de l'eau, qui peuvent par exemple se présenter sous la forme de contacts ohmiques disposés sur la boîte du dispositif, sont alimentés en permanence ou de façon périodique.

Les contacts ohmiques remplissent ainsi une fonction d'interrupteur principal pour les circuits dédiés au mode de fonctionnement relatif à la pratique de la plongée, notamment pour le capteur de pression. En effet, lorsque la présence d'eau est détectée au niveau des contacts ohmiques, la fréquence d'alimentation du capteur de pression est modifiée de sorte que des mesures de la pression environnante sont effectuées avec une période de l'ordre de la seconde, dans le cadre d'un mode de fonctionnement appelé mode de préparation. Ces mesures permettent de calculer la valeur de la variation de pression entre la dernière valeur mesurée et la dernière valeur de la pression de référence mémorisée, la valeur de la variation étant ensuite comparée à une valeur prédéfinie constituant un seuil de déclenchement du mode plongée. Lorsque la variation de la pression franchit le seuil de déclenchement, le mode plongée est activé. Dans le cas contraire, le capteur est encore alimenté pendant quelques minutes pour surveiller l'évolution de la pression environnante. Une fois ce délai écoulé, le mode de préparation est désactivé et le capteur de pression est à nouveau alimenté avec une période de l'ordre de l'heure.

Un tel procédé de détection permet par exemple de faire une distinction entre une situation suivant laquelle le porteur du dispositif mouille celui-ci en se lavant les mains et une situation correspondant effectivement au début d'une plongée. Dans ce dernier cas, en effet, les mesures de pression effectuées par le capteur de pression permettent de valider le début d'une plongée suite à l'activation du mode de préparation, dans la mesure où le dispositif subit dans un premier temps un contact avec l'eau avant de voir sa pression environnante croître.

Toutefois, ce type de dispositif présente un inconvénient important du point de vue de sa construction résidant dans la nécessité de prévoir des moyens spécifiques de détection de la présence d'eau au niveau de sa boîte. Dans le cas précité de l'utilisation de contacts ohmiques, il est en effet impératif de prévoir des moyens spécifiques permettant de garantir l'étanchéité de la boîte du dispositif dans la région de ces contacts, ce qui peut impliquer des conséquences importantes en ce qui concerne le coût de fabrication du dispositif. De ce fait, le procédé décrit ci-dessus présente un inconvénient similaire du fait qu'il est basé sur la mise en oeuvre de moyens spécifiques de détection de la présence d'eau.

D'autres procédés et dispositifs sont connus de l'art antérieur qui ne mettent pas en oeuvre de tels moyens spécifiques de détection de la présence d'eau et qui exploitent des mesures de la pression environnante pour détecter le début d'une plongée.

En particulier, on connaît de tels dispositifs dans lesquels un capteur de pression est périodiquement alimenté pour mesurer la valeur de la pression environnante, les résultats de ces mesures étant mémorisés. Ces dispositifs sont agencés pour qu'à chaque nouvelle mesure de la pression environnante, la valeur de la variation entre cette dernière mesure et la précédente est calculée et comparée à une valeur définissant un seuil de déclenchement. Une fois le seuil de déclenchement franchi, le mode plongée est activé, l'avant dernière valeur de la pression mesurée étant typiquement mémorisée en tant que pression de référence, c'est-à-dire qu'elle est censée correspondre à la pression de surface du plan d'eau dans lequel la plongée est effectuée.

Ce type de dispositifs présente toutefois un inconvénient du fait que l'exactitude de la détection du début d'une plongée est entièrement basée sur la valeur retenue pour le seuil de déclenchement.

Ainsi, si la valeur retenue pour ce seuil est trop faible, le dispositif est exposé à un risque de déclenchements intempestifs du mode plongée. A titre d'exemple, si le porteur d'un tel dispositif descend une route de montagne à un rythme soutenu, le dispositif est susceptible d'assimiler l'augmentation de pression correspondante à une entrée dans l'eau. D'un autre côté, si la valeur retenue pour le seuil est trop grande, la précision sur le déclenchement risque de ne pas être bonne si le porteur reste dans l'eau à proximité de la surface pendant un certain temps avant le début d'une plongée. Dans un pareil cas, il se peut en outre que la valeur de la pression de référence mémorisée ne soit pas correcte car mesurée dans l'eau, à une profondeur inférieure à celle correspondant au seuil de déclenchement. Une telle erreur peut, suivant son amplitude, présenter des conséquences dangereuses pour la santé du porteur du dispositif, notamment du point de vue des données relatives à un éventuel palier de décompression sur lesquelles l'erreur serait reportée.

Un autre exemple de dispositif de détection du début d'une plongée est également décrit dans le document EP 0 682 301.

### RÉSUMÉ DE L'INVENTION

Un premier but de la présente invention est de pallier les inconvénients susmentionnés de l'art antérieur en proposant un procédé de détection du début d'une plongée avec une précision accrue, la détection étant effectuée sur la base de valeurs mesurées de la pression ambiante, ainsi qu'un dispositif électronique portable adapté à la mise en oeuvre d'un tel procédé.

Dans ce but, l'invention prévoit notamment un procédé du type indiqué plus haut, comprenant les étapes consistant à:
a) mesurer périodiquement la valeur de la pression environnante à une première fréquence,
b) mémoriser la valeur de la pression environnante en tant que pression de référence dans la zone mémoire à une seconde fréquence inférieure à la première fréquence,
c) calculer périodiquement la valeur de la variation de pression entre la pression environnante mesurée et la pression de référence à la première fréquence et, comparer la valeur de variation de la pression à une valeur prédéfinie, appelée seuil de déclenchement et stockée dans la zone mémoire,
d) activer le mode plongée si la valeur de variation de pression est supérieure au seuil de déclenchement ou, dans le cas contraire, continuer à l'étape suivante,
e) calculer, à une troisième fréquence, la valeur de la variation de la pression entre les deux dernières valeurs mesurées de la pression environnante et, comparer la valeur de variation de la pression à une grandeur prédéfinie, stockée dans la zone mémoire ou déterminée sur la base de valeurs de pression mesurées, la grandeur étant inférieure au seuil de déclenchement, la troisième fréquence étant inférieure ou égale à la première fréquence,
f) reprendre à l'étape a) si la valeur de variation de la pression est inférieure à la grandeur ou, dans le cas contraire, mettre en oeuvre une boucle de vérification du début de plongée comprenant les opérations consistant à :
   - mémoriser la valeur de pression de référence en tant que valeur de sauvegarde de la pression de référence,
   - reprendre les étapes a) à d) pendant une durée prédéterminée au cours de laquelle la valeur de la pression de référence mémorisée est remplacée par la valeur de sauvegarde de la pression de référence si le mode plongée est activé dans l'étape d),
   - reprendre normalement les étapes a) à f) une fois que la durée prédéterminée est écoulée.

Ainsi, selon ce procédé de détection, la mise à jour de la valeur de la pression de référence se fait de manière systématique, à une fréquence donnée, cette valeur étant utilisée comme référence pour détecter le début d'une plongée.

En outre, dans certaines circonstances particulières en termes de pression ambiante, le procédé selon la présente invention prévoit une mesure particulière permettant de prévenir des erreurs d'appréciation du début d'une plongée, comme elles peuvent survenir avec les procédés de l'art antérieur précités. Plus précisément, le procédé selon la présente invention prévoit une sauvegarde de la valeur de la pression de référence en cas de doute sur un éventuel début de plongée. Ainsi, en cas de confirmation du début d'une plongée dans un intervalle de temps de durée prédéfinie, la valeur sauvegardée est utilisée comme valeur de référence pour le fonctionnement du mode plongée à la place de la valeur éventuellement mise à jour dans cet intervalle de temps alors que, par exemple, le porteur du dispositif mettant en oeuvre le procédé de détection était peut-être déjà dans l'eau. De ce fait, on obtient une précision accrue, par rapport aux dispositifs de l'art antérieur précédemment cités, en particulier pour la valeur retenue comme valeur de la pression environnante à la surface du plan d'eau dans lequel une plongée est effectuée.

### BRÈVE DESCRIPTION DES DESSINS

D'autres caractéristiques et avantages de la présente invention apparaîtront plus clairement à la lecture de la description détaillée qui suit, faite en référence aux dessins annexés donnés à titre d'exemples non limitatifs et dans lesquels:
- la figure 1 est un diagramme schématique général du circuit électronique d'un exemple de dispositif électronique portable pour la mise en oeuvre du procédé selon la présente invention, et
- la figure 2 est un diagramme exposant de manière schématique les étapes du procédé de détection du début d'une plongée selon un mode de réalisation préféré de la présente invention.

### DESCRIPTION DÉTAILLÉE

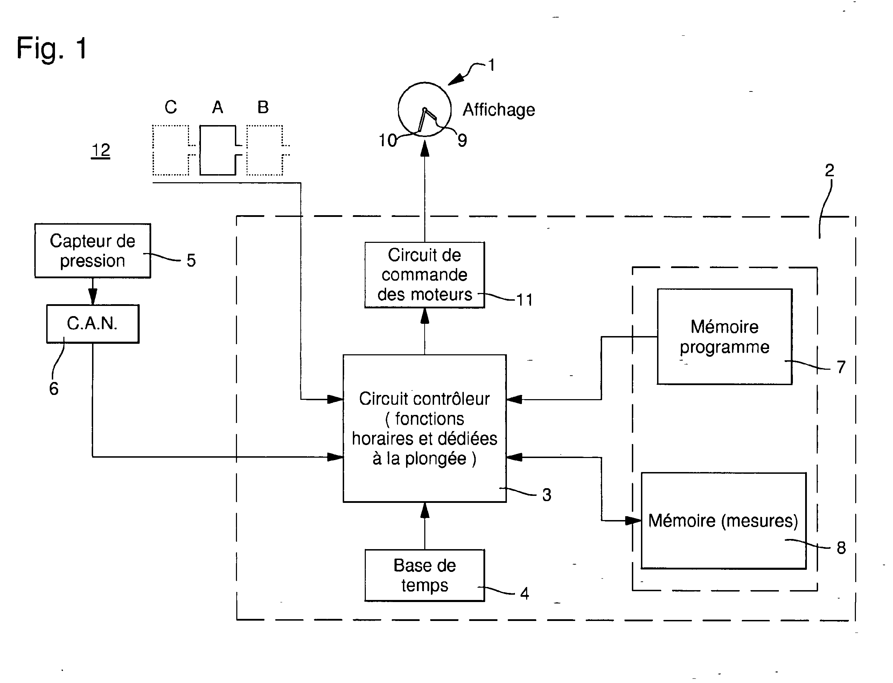

La figure 1 représente de manière schématique un diagramme général du circuit électronique d'un exemple de dispositif électronique portable pour la mise en oeuvre du procédé selon la présente invention. Dans l'exemple retenu ici, le dispositif électronique portable se présente sous la forme particulière d'une montre 1 électronique de plongée à affichage analogique comportant au moins deux modes de fonctionnement, un premier mode horaire et un second mode plongée.

Bien entendu, le procédé selon la présente invention n'est pas limité à sa mise en oeuvre sur une montre mais peut également être mis en oeuvre sur tout type d'ordinateur de plongée portable conventionnel sans sortir du cadre de la présente invention.

De manière générale, le circuit électronique de la montre 1 comprend notamment un circuit intégré 2 comportant un circuit contrôleur 3 susceptible de gérer les fonctions horaires conventionnelles de la montre 1 comprenant, dans ce but, un circuit de division du temps et étant relié notamment à un résonateur 4 fournissant une base de temps. A partir de cette base de temps, des informations temporelles sont produites par le circuit contrôleur 3, notamment pour assurer les fonctions du mode horaire et les fonctionnalités relatives au mode plongée.

En outre, le circuit contrôleur 3 reçoit en entrée des signaux produits par un capteur de pression 5 générant des signaux électriques analogiques représentatifs de la pression environnante. Ces signaux transitent par un convertisseur analogique-numérique 6 avant d'être fournis en entrée du circuit contrôleur 3, sous la forme d'un signal digital.

Le capteur de pression 5 est de type conventionnel et l'homme du métier ne rencontrera pas de difficulté particulière pour en choisir un qui soit adapté à la mise en oeuvre de la présente invention.

Le circuit intégré 2 comporte également des zones de mémoire, notamment une première zone de mémoire 7, préférablement de type non volatile, contenant un programme permettant au circuit contrôleur 3 d'effectuer les calculs relatifs au mode plongée, sur la base d'un algorithme de décompression, par exemple. Le choix d'une mémoire non volatile reprogrammable (Flash ou EPROM, par exemple) permet éventuellement de modifier ultérieurement le programme de calcul en fonction de l'algorithme de décompression retenu. Le circuit intégré 2 comporte de manière préférée au moins une seconde zone de mémoire 8, également de type non volatile, dans laquelle des mesures ainsi que des résultats de calculs effectués par le circuit contrôleur 3 sont stockés. Cette seconde zone de mémoire 8 est notamment prévue pour stocker les mesures de profondeur et les mesures temporelles correspondantes relatives à la ou aux dernières plongées, à titre illustratif.

A partir de ces signaux d'entrée respectifs, le circuit contrôleur 3 détermine la situation et l'état du plongeur à chaque instant, du point de vue de la pratique de la plongée. Dans ce but, on peut notamment prévoir qu'en mode horaire, une mesure de pression est effectuée toutes les dix secondes et qu'en mode plongée, une mesure de pression est effectuée toutes les secondes, par exemple. A partir de toutes ces mesures périodiques et sur la base du programme stocké dans la première zone de mémoire 7, le circuit contrôleur 3 détermine un certain nombre de paramètres pertinents pour la santé du plongeur, c'est-à-dire en particulier, le taux résiduel d'azote dissout dans son organisme et la quantité de micro-bulles formées, par exemple.

Par ailleurs, dans l'exemple de réalisation décrit, la montre 1 présente un affichage de type analogique, comprenant notamment des aiguilles des heures 9 et des minutes 10, commandées par des moteurs bidirectionnels (non représentés). Ainsi, le circuit contrôleur 3 est programmé pour produire des signaux adaptés à destination d'un circuit de commande 11 des moteurs bi-directionnels, de telle manière que les aiguilles des heures 9 et des minutes 10 affichent des informations relatives à l'heure courante, dans un premier mode horaire, et des informations relatives à la pratique de la plongée dans un second mode de plongée. La montre comporte en outre un organe de commande 12, tel qu'une tige-couronne, prévu notamment pour ajuster l'heure courante ou encore pour activer des fonctions particulières. A titre d'exemple non limitatif, on a représenté sur la figure 1 trois positions notées A, B et C pour l'organe de commande 12, la position A étant une position de repos, la position B une position poussée instable et, la position C une position tirée stable.

Le lecteur intéressé par le fonctionnement d'un dispositif électronique portable de ce type pourra consulter, par exemple, les demandes de brevets EP 1 396 766 A1 et EP 1 396 767 A1, toutes deux déposées au nom d'Asulab S.A. le 4 septembre 2002 et intitulées "Montre électronique de plongée à affichage analogique", pour obtenir plus de détails. En effet, le procédé selon la présente invention concernant le passage d'un premier mode de fonctionnement vers le mode plongée, le fonctionnement de ce dernier ne sera pas abordé en détail dans la présente demande.

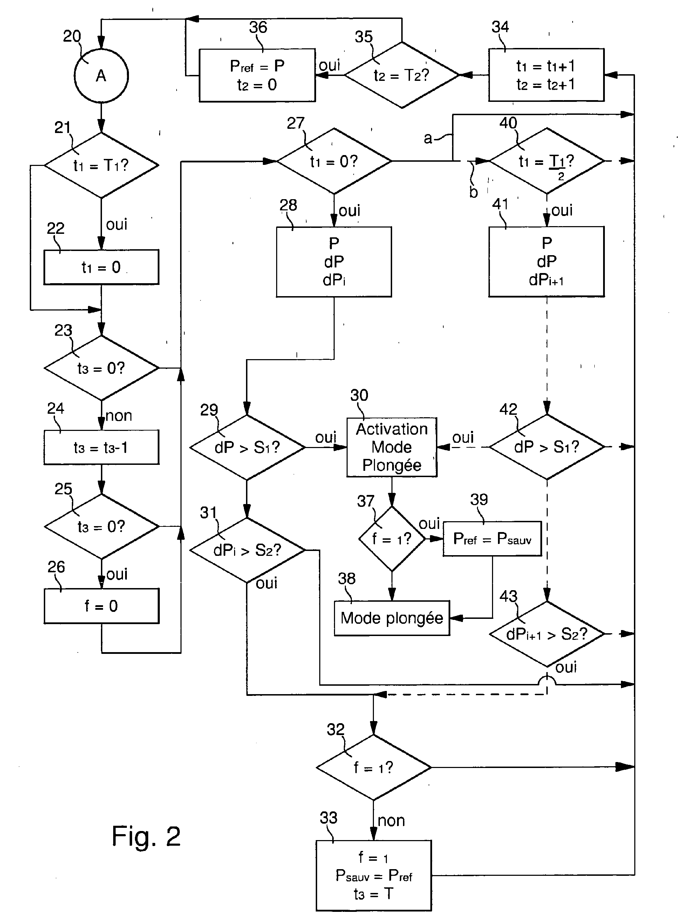

La figure 2 présente un diagramme relatif à un mode de réalisation préféré du procédé de détection du début de plongée selon la présente invention, la description de ce mode de réalisation étant fournie à titre non limitatif. Ce procédé permet de "filtrer" les mesures de pression effectuées périodiquement par le capteur de pression 5 pour limiter les déclenchements intempestifs du mode plongée, comme cela peut arriver avec certains dispositifs de l'art antérieur. Plus particulièrement, ce procédé vise à éviter qu'un dispositif le mettant en oeuvre ne détecte pas le début d'une plongée au bon moment, du fait par exemple que le porteur reste un moment dans l'eau, au niveau de la surface, avant de réellement débuter la plongée en tant que telle. Dans une telle situation, la mise en oeuvre d'un procédé selon l'art antérieur aurait pour fâcheuse conséquence de mémoriser une valeur de pression de référence erronée puisque mesurée dans l'eau.

Le circuit contrôleur 3 est programmé de manière à alimenter périodiquement le capteur de pression 5 lorsque la montre est dans le mode horaire, pour effectuer des mesures de la valeur de la pression environnante.

Le procédé démarre au stade A, repéré par la référence numérique 20, du diagramme, une valeur de pression précédemment mesurée étant mémorisée en tant que pression de référence Pref. En outre, un premier compteur (non représenté) est prévu pour mesurer des premiers intervalles de temps t1, ce compteur ayant une valeur de t1 comprise entre 0 et T1 au stade A, T1 représentant une valeur de période de mesures. De manière préférée, la période T1 est sensiblement comprise entre 0,1 et 10 secondes. La fonction principale du premier compteur est la mesure des intervalles de temps séparant deux boucles successives de test, en tant que tel, pour évaluer si le porteur du dispositif dans lequel le procédé selon la présente invention est mis en oeuvre se trouve dans une situation correspondant au début d'une plongée.

A l'étape 21 du diagramme, à partir du stade A, le circuit contrôleur 3 teste la valeur du premier compteur. Tant que la valeur du compteur n'est pas égale à T1, le procédé continue à l'étape 23 du diagramme. Lorsque la valeur du premier compteur atteint la valeur T1, celle-ci est remise à zéro, en 22 sur la figure 2, avant de reprendre à l'étape 23.

L'étape 23 constitue une nouvelle opération de test effectuée sur la valeur d'un troisième compteur t3 pour vérifier si la valeur de t3 est nulle ou non. La valeur de t3 par défaut est nulle, les cas dans lesquels cette valeur n'est pas nulle seront exposés plus loin dans la présente description.

Lorsque la valeur de t3 est nulle, le procédé se poursuit directement à l'étape 27, où la valeur t1 du premier compteur est à nouveau testée. Lorsque la valeur de t1 est différente de zéro, le procédé se poursuit par le chemin noté a sur la figure 2, pour aller à l'étape référencée 34.

L'étape 34 constitue une étape de comptage au cours de laquelle la valeur t1 du premier compteur est incrémentée. On constate de même, sur la figure 2, que la valeur d'un second compteur t2 est également incrémentée à l'étape 34, la fonction principale de ce second compteur étant la mesure des intervalles de temps séparant deux mises à jour successives, dans la zone mémoire 8, de la valeur mémorisée en tant que valeur de la pression de référence Pref. Préférablement, la mise à jour de la valeur de Pref est périodique de période T2, T2 présentant une valeur sensiblement comprise entre 20 secondes et 10 minutes. Autrement dit la fréquence f2 de mise à jour de la valeur de la pression de référence Pref est sensiblement comprise entre 0,001 et 0,05 Hz.

Le cycle qui vient d'être décrit, qui constitue une simple boucle de comptage, se termine au point de départ A, en 20, après une mise à jour éventuelle de la valeur de la pression de référence Pref mémorisée. En effet, le procédé prévoit de tester en 35 la valeur t2 du second compteur. Si t2 est différent de T2, c'est-à-dire qu'une période complète ne s'est pas encore écoulée, le procédé recommence directement en A sans mettre à jour la valeur de la pression de référence. Si, au contraire, t2 est égal à T2, une période complète s'est écoulée et la valeur de la pression de référence Pref est mise à jour en 36, tandis que la valeur t2 du second compteur est réinitialisée avant de reprendre en A.

Le cycle, tel que décrit ci-dessus, est répété jusqu'à ce que le premier compteur prenne la valeur T1 en 34, cette valeur étant ensuite détectée en 21 au cycle suivant, entraînant une remise à zéro du premier compteur.

Ainsi, le test de l'étape 27 sur la valeur du premier compteur renvoie la réponse "oui", autrement dit, la valeur nulle du premier compteur entraîne une poursuite du procédé vers l'étape 28 de la figure 2.

Le capteur de pression 5 est alors alimenté pour effectuer une mesure de la pression environnante P, en 28. Sur la base de la mesure effectuée, le circuit contrôleur 3 calcule une variation de pression dP, sur la base des valeurs de pression dernièrement mesurée et de pression de référence Pref précédemment mémorisée. Par ailleurs, le circuit contrôleur calcule également une variation de pression dPi sur la base des deux dernières mesures de la pression environnante effectuées, la dernière valeur mesurée étant systématiquement mémorisée dans la zone de mémoire 8.

Le circuit contrôleur 3 compare ensuite, en 29, la valeur calculée pour la variation de la pression dP à une première valeur prédéfinie S1, appelée seuil de déclenchement et qui correspond à une hauteur d'eau valant préférablement entre 0,2 et 1,5 mètres.

Lorsque la valeur de la variation de la pression dP excède le seuil de déclenchement S1, le mode plongée est activé, en 30.

Dans le cas contraire, à savoir lorsque la valeur de la variation de la pression dP est inférieure à la valeur du seuil de déclenchement S1, le circuit contrôleur 3 effectue un test supplémentaire sur la valeur de la variation de la pression dPi, en 31. Plus précisément, le circuit contrôleur compare la valeur de dPi à une seconde valeur prédéfinie S2, inférieure au seuil de déclenchement S1, cette opération étant préférablement effectuée à la même fréquence que les mesures de la pression environnante, en 28. Toutefois, on peut prévoir en alternative que la fréquence du test 31 est différente de celle des mesures de la pression environnante sans sortir du cadre de la présente invention. La seconde grandeur prédéfinie S2 correspond préférablement à une profondeur comprise entre la résolution du capteur, soit environ 0,05 mètre suivant le type de capteur agencé dans le dispositif, et 0,5 mètre.

Lorsque la valeur de dPi est inférieure à S2, le procédé se termine directement par l'étape d'incrémentation, en 34, et éventuellement par l'étape de mise à jour de la valeur de la pression de référence Pref mémorisée, en 36, tel que cela a déjà été décrit plus haut.

Dans le cas contraire, à savoir lorsque la valeur de dPi est supérieure ou égale à la seconde valeur prédéfinie S2, le procédé se poursuit par un test supplémentaire, repéré par la référence numérique 32 sur la figure 2.

Ce test 32 consiste à évaluer la valeur d'un indicateur d'état noté f, la valeur de l'indicateur d'état f étant fonction de la situation du dispositif dans lequel le procédé selon la présente invention est mis en oeuvre. Plus précisément, l'indicateur f peut prendre deux valeurs, 1 ou 0, selon que le procédé a permis de détecter un début probable de plongée ou non, sans que le seuil de détection S1 n'ait été franchi lors du test de l'étape 29. Un début probable de plongée est détecté à l'étape 31, lorsque la valeur de la variation de la pression entre deux mesures successives dépasse la valeur de la seconde grandeur prédéfinie S2. Dans ce cas, une boucle de vérification du début d'une plongée est activée pendant une durée prédéterminée, l'indicateur f prenant la valeur 1 lorsque cette boucle de vérification est opérationnelle. Lorsque le procédé ne permet pas de détecter un début probable de plongée et que la boucle de vérification n'est pas opérationnelle, la valeur de l'indicateur f reste nulle.

Ainsi, l'étape de test en 32 permet d'évaluer si une boucle de vérification est opérationnelle. Si tel est le cas, c'est-à-dire si la valeur de l'indicateur f est 1, le procédé se poursuit à l'étape 34 d'incrémentation.

Lorsque la valeur de l'indicateur d'état f est nulle lors du test en 32, cela signifie qu'un début probable de plongée est détecté alors que la boucle de vérification n'est pas opérationnelle. Le procédé se poursuit alors à l'étape 33 au cours de laquelle la valeur de l'indicateur d'état f est modifiée de 0 à 1 pour prendre en compte l'activation de la boucle de vérification.

D'autre part, la valeur de la pression de référence Pref mémorisée est sauvegardée dans la zone de mémoire 8, en tant que valeur de sauvegarde de la pression de référence Psauv. Comme cela a déjà été mentionné, une telle mesure de sauvegarde permet de continuer à mettre à jour périodiquement la valeur de la pression de référence mémorisée à l'étape 36 alors qu'un début de plongée est suspecté. Dans un même temps, la valeur du troisième compteur t3 est modifiée de 0 à T, T correspondant à une durée prédéterminée pendant laquelle la boucle de vérification est maintenue opérationnelle. De manière préférée, on pourra choisir que T est une valeur de l'ordre de 2 à 10 minutes, ce qui correspond à une valeur raisonnable pour tenir compte d'une situation du type de celle mentionnée précédemment, à savoir lorsque le plongeur reste dans l'eau, à proximité de la surface, pendant un instant avant de débuter réellement la plongée.

Le procédé se poursuit ensuite par la mise en oeuvre de l'étape d'incrémentation 34 déjà mentionnée.

Une fois que la boucle de vérification est activée, le cycle tel qu'il a été décrit précédemment présente certaines modifications dans son fonctionnement pour tenir compte de la suspicion du début d'une plongée.

En particulier, le test de l'étape 23 sur la valeur du troisième compteur t3 indique que cette valeur n'est pas nulle dans la mesure où elle a été modifiée à T dans l'étape 33. A ce stade, la valeur du troisième compteur est alors décrémentée, en 24 avant d'être à nouveau testée en 25 pour vérifier si sa nouvelle valeur est nulle.

Une valeur nulle du troisième compteur t3 indique que la durée prédéterminée T est écoulée et que la boucle de vérification du début d'une plongée peut se terminer. Dans ce cas, la valeur de l'indicateur d'état f est remise à zéro à l'étape 26 pour indiquer au dispositif sur lequel le procédé est mis en oeuvre que la boucle de vérification de début d'une plongée n'est pas active, cette information étant notamment pertinente en relation avec le test de l'étape 32. Après la remise à zéro de la valeur de l'indicateur d'état f, le procédé se poursuit normalement à l'étape 27, de la manière précédemment décrite.

Une valeur différente de zéro du troisième compteur t3 indique que la boucle de vérification du début d'une plongée précédemment activée n'est pas encore achevée. La boucle de vérification se poursuit alors à l'étape 27, tel que mentionné ci-dessus, c'est-à-dire sans mettre en oeuvre l'étape 33 si la valeur de la différence entre les deux dernières valeurs de pression mesurées dPi est supérieure à la valeur de la seconde grandeur prédéfinie S2 lors du test référencé 31.

Si le seuil de déclenchement est franchi lors du test de l'étape 29, alors que la boucle de vérification est activée, la suspicion du début d'une plongée est confirmée. De manière générale, un test supplémentaire de la valeur de l'indicateur d'état f, prévu à l'étape 37, est mis en oeuvre pour détecter la valeur de l'indicateur f et confirmer, dans le présent cas, que la boucle de vérification est effectivement active.

S'il ressort du test en 37 que la valeur de l'indicateur f est nulle, ce qui correspond à une situation où aucun début de plongée n'était suspecté, le mode plongée, en tant que tel, est directement activé en 38.

Si par contre, l'activation de la boucle de vérification est confirmée par une valeur de l'indicateur f égale à 1 dans l'étape 37, la valeur de la pression de référence mémorisée Pref est remplacée par la valeur de la pression de référence sauvegardée à l'étape 33, Psauv, dans l'étape référencée par 39 sur la figure 2 avant de mettre en oeuvre le mode plongée, en tant que tel, en 38.

En effet, la valeur mémorisée de la pression de référence Pref sert non seulement dans la détection du début d'une plongée par calcul d'une variation de la pression ambiante, mais également dans le fonctionnement du mode plongée en tant que tel, notamment pour effectuer le calcul de la profondeur à un instant donné de la plongée. Ainsi, on peut noter qu'il est important d'avoir une bonne précision sur la valeur de la pression de référence mémorisée, d'une part, pour garantir un fonctionnement fiable du dispositif sur lequel le procédé est mis en oeuvre, d'autre part, pour des raisons de sécurité en rapport avec la santé du porteur du dispositif. Le procédé selon la présente invention pouvant être mis en oeuvre sur des dispositifs de complexités diverses, il est par conséquent envisageable que l'un au moins de ces dispositifs soit susceptible de fournir à son porteur des indications relatives à d'éventuels paliers de décompression à respecter lors de la plongée. La détermination de ces paliers de décompression ainsi que leur respect en termes de profondeur sont soumis aux indications fournies par le dispositif. De ce fait, si la valeur de la pression de référence mémorisée Pref n'est pas correcte, les calculs de dissolution des gaz dans l'organisme du plongeur de même que l'indication des paliers ne seront pas corrects ce qui représente un risque important pour la santé du plongeur.

Le procédé de sauvegarde selon la présente invention permet avantageusement de répondre aux exigences susmentionnées.

On a également représenté sur la figure 2 des étapes supplémentaires mises en oeuvre selon une variante du mode de réalisation qui vient d'être décrit et qui sont ajoutées dans la boucle de comptage.

Pour augmenter la fiabilité de la détection du début d'une plongée, on peut en effet prévoir d'évaluer le comportement de la pression environnante plusieurs fois à chaque période T1.

Ainsi, lorsqu'il apparaît du test de l'étape 27 que la valeur du premier compteur t1 est différente de zéro, on peut effectuer un test 40 supplémentaire sur sa valeur en suivant le chemin noté b sur la figure 2. Le test de l'étape 40 prévoit de vérifier si la valeur du premier compteur t1 vaut T1/2. Lorsque c'est le cas, une série de tests supplémentaires est effectuée aux étapes 41, 42 et 43, respectivement similaires aux étapes 28, 29 et 31.

En effet, lorsque la valeur du premier compteur t1 vaut T1/2, la pression environnante P est mesurée, la différence de pression entre P et Pref est calculée, de même que la variation de pression dPi+1 entre les dernière et antépénultième valeurs de la pression environnante mesurées, ces deux valeurs étant séparées d'une période complète. Bien entendu, dans le calcul de dPi à l'étape 28 et selon la présente variante de réalisation, le calcul est également effectué entre les dernière et antépénultième valeurs de la pression mesurées, dans le but de conserver un intervalle égal à une période complète entre les instants correspondants des deux mesures.

Les deux tests suivant, aux étapes 42 et 43, sont identiques aux tests respectifs 29 et 31, la valeur de dPi+1 étant comparée à la seconde grandeur prédéfinie S2 dans le test référencé 43, au lieu de dPi à l'étape 31.

Le résultat de la mise en oeuvre de la présente variante de réalisation est l'obtention de deux séries de tests identiques simplement "entrelacées" entre-elles pour améliorer la précision de la détection du début d'une plongée par rapport à la version simple décrite plus haut.

Il est évident que l'homme du métier pourra mettre en oeuvre le principe ci-dessus pour un nombre différent de séries de tests sans sortir du cadre de la présente invention. Bien entendu, plus les périodes T1 et T2 sont longues, plus il devient possible de multiplier les séries de tests entrelacées.

Un principe général du procédé selon la présente invention consiste à suivre le comportement de la pression environnante pour en détecter d'éventuelles augmentations qui pourraient fournir un indice sur un éventuel début de plongée. Dans ce but, l'utilisation d'une grandeur prédéfinie S2 dans les étapes 31 et 43 n'est pas le seul critère possible. En effet, on peut prévoir à titre d'alternative d'évaluer le comportement récent de la valeur de la pression environnante par rapport à son comportement moyen pris sur un intervalle de temps plus important. Dans ce but, le procédé de détection peut être tel que le circuit contrôleur 3 mémorise la dernière valeur de la variation de la pression dPi calculée, telle qu'elle a été définie plus haut, dans la zone mémoire 8, cette dernière comportant préférablement au moins quatre emplacements à cet effet. Ainsi, la dernière valeur de la variation de la pression dPi calculée est mémorisée en remplaçant la valeur de dPi la plus ancienne encore en mémoire. Le circuit contrôleur calcule alors la valeur moyenne dPm de la variation de la pression sur la base des quatre dernières valeurs mises en mémoire, notées dPi-3, dPi-2, dPi-1 et dPi, simplement en les additionnant et en divisant le résultat de l'addition par quatre.

A partir de la valeur dPm calculée ci-dessus, le circuit contrôleur 3 compare, en 31, cette valeur moyenne à la dernière valeur de la variation de la pression dPi calculée.

Lorsque la dernière valeur de la variation de la pression dPi est inférieure à dPm, le procédé se poursuit à l'étape d'incrémentation des premier et second compteurs, en 34.

Lorsque la dernière valeur de la variation de la pression dPi est supérieure à dPm la boucle de vérification du début de plongée est activée si elle ne l'était pas encore. Dans ce cas, on considère en effet que la dernière variation de la pression calculée est trop importante par rapport à cette variation prise en compte sur une durée plus longue, c'est pourquoi le procédé prévoit alors une étape de sauvegarde de la valeur de la pression de référence Pref mémorisée, en 33.

Selon une variante préférée du procédé qui vient d'être décrit, on prévoit de remplacer les valeurs mémorisées de la variation de la pression dPi-3, dPi-2, dPi-1 et dPi par zéro dans la zone mémoire 8 au cours de la mise en oeuvre de l'étape 26, c'est-à-dire lorsque le circuit contrôleur 3 détermine qu'un temps suffisamment long s'est écoulé depuis le début de la suspicion, ce temps étant égal à T, sans que le début d'une plongée n'ait été effectivement confirmé.

Le principe général de fonctionnement du procédé selon le présent mode de réalisation est basé sur le fait que la pression environnante augmente de façon notable lors du début d'une plongée. Ainsi, lorsque la valeur de la pression varie rapidement d'une valeur suffisante pour dépasser le seuil de déclenchement, le mode plongée est activé. Dans le cas contraire, on distingue ensuite deux cas de figure, à savoir le premier cas d'une stabilité de la pression environnante et le second cas d'une augmentation modérée de la pression environnante.

Dans le premier cas, on considère que le porteur ne se trouve pas dans l'eau. La valeur de la pression de référence Pref mémorisée est alors mise à jour sans précaution particulière, dans la mesure où la valeur mémorisée est en principe représentative de la valeur réelle de la pression atmosphérique avec une bonne précision.

Dans le second cas, une augmentation modérée de la pression environnante peut être attribuée à deux causes différentes, soit une entrée dans l'eau tout en restant à une faible profondeur, soit une descente rapide en surface, comme par exemple une descente rapide de montagne en voiture ou encore lors de la pratique d'un sport aérien. Le procédé selon la présente invention permet de tenir compte de ce type d'évènements du fait que la dernière valeur de la pression de référence est sauvegardée pour anticiper une éventuelle confirmation d'un début de plongée.

De plus, grâce à un tel procédé, la détection du début d'une plongée peut être garanti avec une bonne fiabilité, les déclenchements intempestifs du mode plongée étant en outre fortement limités.

La description qui précède correspond à des modes de réalisation préférés de l'invention et ne saurait en aucun cas être considérée comme limitative, en ce qui concerne plus particulièrement la structure décrite pour le dispositif de mise en oeuvre du procédé, les fonctions décrites, la nature et le nombre des organes de commande utilisés. Comme mentionné précédemment, le procédé de détection selon la présente invention peut être mis en oeuvre dans tout dispositif électronique portable du type ordinateur de plongée, que son affichage soit analogique ou numérique. De même, l'invention n'est pas limitée aux modes de fonctionnements décrits, dans la mesure où ces paramètres sont modifiables par une programmation adéquate du circuit contrôleur. L'homme du métier ne rencontrera pas de difficulté particulière pour adapter le procédé selon la présente invention à ses propres besoins, notamment en ce qui concerne les valeurs fournies à titre d'exemple pour les fréquences et les grandeurs de correction.

## Revendications

1. Procédé de détection du début d'une plongée pour dispositif électronique portable (1) présentant au moins un premier mode de fonctionnement et un second mode de fonctionnement, dit mode plongée, et comportant notamment un capteur de pression (5) pour mesurer la valeur de la pression environnante (P) ainsi que des circuits électroniques (2) de traitement des résultats desdites mesures comprenant une base de temps (4) et au moins une première zone mémoire (7, 8), le procédé, mis en oeuvre dans ledit premier mode de fonctionnement, comportant les étapes consistant à:
a) mesurer périodiquement la valeur de la pression environnante (P) à une première fréquence (f1),
b) mémoriser ladite valeur de la pression environnante en tant que pression de référence (Pref) dans ladite zone mémoire (8) à une seconde fréquence (f2) inférieure à ladite première fréquence (f1),
c) calculer périodiquement la valeur de la variation de pression (dP) entre la pression environnante mesurée (P) et la pression de référence (Pref) à ladite première fréquence (f1) et, comparer ladite valeur de variation de la pression (dP) à une valeur prédéfinie, appelée seuil de déclenchement (S1) et stockée dans ladite zone mémoire (8),
d) activer ledit mode plongée si ladite valeur de variation de pression (dP) est supérieure au dit seuil de déclenchement ou, dans le cas contraire, continuer à l'étape suivante,
e) calculer, à une troisième fréquence (f3), la valeur de la variation de la pression (dPi) entre les deux dernières valeurs mesurées de la pression environnante et, comparer ladite valeur de variation de la pression (dPi) à une grandeur prédéfinie (S2), stockée dans ladite zone mémoire (8) ou déterminée (dPm) sur la base de valeurs de pression mesurées, ladite grandeur (S2) étant inférieure au dit seuil de déclenchement (S1), ladite troisième fréquence (f3) étant inférieure ou égale à ladite première fréquence (f1),
f) reprendre à l'étape a) si la valeur de variation de la pression (dPi) est inférieure ou égale à ladite grandeur (S2) ou, dans le cas contraire, mettre en oeuvre une boucle de vérification du début de plongée comprenant les opérations consistant à:
- mémoriser ladite valeur de pression de référence (Pref) en tant que valeur de sauvegarde de la pression de référence (Psauv),
- reprendre les étapes a) à d) pendant une durée (T) prédéterminée au cours de laquelle la valeur de la pression de référence mémorisée (Pref) est remplacée par ladite valeur de sauvegarde de la pression de référence (Psauv) si ledit mode plongée est activé dans l'étape d),
- reprendre normalement les étapes a) à f) une fois que ladite durée prédéterminée (T) est écoulée.

2. Procédé de détection selon la revendication 1, dans lequel lesdites première (f1) et troisième (f3) fréquences sont égales.

3. Procédé de détection selon la revendication 1 ou 2, comprenant les étapes supplémentaires a'), c'), d'), e') et f') respectivement identiques aux étapes a), c), d), e) et f), la mise en oeuvre desdites étapes a'), c'), d'), e') et f') étant intercalée entre deux mises en oeuvre successives desdites étapes a), c), d), e) et f).

4. Procédé de détection selon l'une quelconque des revendications précédentes, dans lequel ladite première fréquence (f1) présente une valeur comprise sensiblement entre 0,1 et 10 Hz.

5. Procédé de détection selon l'une quelconque des revendications précédentes, dans lequel ladite seconde fréquence (f2) présente une valeur comprise sensiblement entre 0,001 et 0,04 Hz.

6. Procédé de détection selon l'une quelconque des revendications précédentes, dans lequel la valeur dudit seuil de déclenchement correspond à une hauteur d'eau comprise sensiblement entre 0,2 et 1,5 mètres.

7. Procédé de détection selon l'une quelconque des revendications précédentes, dans lequel la valeur de ladite durée prédéterminée (T) est préférablement comprise entre 2 et 10 minutes.

8. Procédé de détection selon l'une quelconque des revendications précédentes dans lequel, lorsque ladite grandeur est déterminée sur la base de valeurs de pression mesurées, l'étape e) comprend en outre une action de mise en mémoire de ladite valeur de la variation de pression (dPi) à ladite première fréquence (f1), au moins les trois dernières valeurs de la variation de pression (dPi-2, dPi-1, dPi) mémorisées étant utilisées pour calculer ladite grandeur, cette dernière correspondant au résultat du calcul de la moyenne de la variation de pression (dPm) sur lesdites au moins trois dernières valeurs.

9. Procédé de détection selon la revendication 8, dans lequel ladite grandeur est calculée sur la base des quatre dernières valeurs de la variation de pression (dPi-3, dPi-2, dPi-1, dPi) mémorisées.

## Claims

1. Method for detecting the start of a dive for a portable electronic device (1) having at least one first operating mode and one second operating mode, called the dive mode, and including in particular a pressure sensor (5) for measuring the value of the ambient pressure (P) as well as electronic circuits (2) for processing the results of said measurements including a time base (4) and at least a first memory zone (7, 8), the method implemented in said first operating mode, including the steps of:
a) periodically measuring the ambient pressure value (P) at a first frequency (f1),
b) storing said ambient pressure value as the reference pressure (Pref) in said memory zone (8) at a second frequency (f2) lower than said first frequency (f1),
c) periodically calculating the pressure variation value (dP) between the measured ambient pressure (P) and the reference pressure (Pref) to said first frequency (f1) and, comparing said pressure variation value (dP) to a predefined value, called the trigger threshold (S1) and stored in said memory zone (8),
d) activating said dive mode if said pressure variation value (dP) is higher than said trigger threshold or, in the opposite case, continuing to the next step,
e) calculating, at a third frequency (f3), the pressure variation value (dPi) between the last two measured values of the ambient pressure and comparing said pressure variation value (dPi) to a predefined magnitude (S2), stored in said memory zone (8) or determined (dPm) on the basis of measured pressure values, said magnitude (S2) being lower than said trigger threshold (S1), said third frequency (f3) being less than or equal to said first frequency (f1),
f) returning to step a) if the pressure variation value (dPi) is less than or equal to said magnitude (S2) or, in the opposite case, implementing a dive start check loop comprising the operations of:
- storing said reference pressure value (Pref) as the backup reference pressure (Psauv),
- returning to steps a) to d) for a predetermined period of time (T) during which the stored reference pressure value (Pref) is replaced by said backup reference pressure value (Psauv) if said dive mode is activated in step d),
- returning as normal to steps a) to f) once said predetermined period of time (T) has elapsed.

2. Detection method according to claim 1, wherein said first (f1) and third (f3) frequencies are equal.

3. Detection method according to claim 1 or 2, including the additional steps a'), c'), d'), e') and f') respectively identical to steps a), c), d), e) and f), implementation of said steps a'), c'), d'), e') and f') being inserted between two successive implementations of said steps a), c), d), e) and f).

4. Detection method according to any one of the preceding claims, wherein said first frequency (f1) has a value substantially comprised between 0.1 and 10 Hz.

5. Detection method according to any of the preceding claims, wherein said second frequency (f2) has a value substantially comprised between 0.001 and 0.04 Hz.

6. Detection method according to any one of the preceding claims, wherein the value of said trigger threshold corresponds to a height of water substantially comprised between 0.2 and 1.5 meters.

7. Detection method according to any one of the preceding claims, wherein the value of said predetermined period of time (T) is preferably comprised between 2 and 10 minutes.

8. Detection method according to any one of the preceding claims wherein, when said magnitude is determined on the basis of measured pressure values, step e) further includes an action of storing said pressure variation value (dPi) at said first frequency (f1), at least the last three stored pressure variation values (dPi-2, dPi-1, dPi) being used to calculate said magnitude, the latter corresponding to the result of the calculation of the mean pressure variation (dPm) over said at least three last values.

9. Detection method according to claim 8, wherein said magnitude is calculated on the basis of the last four stored pressure variation values (dPi-3, dPi-2, dPi-1, dPi).

## Patentansprüche

1. Verfahren zum Detektieren des Beginns eines Tauchvorganges für eine tragbare elektronische Vorrichtung (1), die wenigstens einen ersten Betriebsmodus und einen zweiten Betriebsmodus, den Tauchmodus, aufweist, und insbesondere einen Drucksensor (5) zum Messen eines Wertes des Umgebungsdruckes (P) und elektronische Schaltkreise (2) zum Verarbeiten der Ergebnisse der Messungen mit einer Zeitbasis (4) und wenigstens einem ersten Speicherbereich (7, 8) umfasst, wobei das in dem ersten Betriebsmodus implementierte Verfahren folgende Schritte umfasst :
a) periodisches Messen des Wertes des Umgebungsdruckes (P) mit einer ersten Frequenz (f1),
b) Speichern des Wertes des Umgebungsdruckes als Referenzdruck (Pref) in dem Speicherbereich (8) mit einer zweiten Frequenz (f2), die kleiner ist als die erste Frequenz (f1),
c) periodisches Berechnen des Wertes der Druckvariation (dP) zwischen dem gemessenen Umgebungsdruck (P) und dem Referenzdruck (Pref) mit der ersten Frequenz (f1) und Vergleichen dieses Wertes der Druckschwankung (dP) mit einem als Auslöseschwelle (S1) bezeichneten vorbestimmten Wert, der in dem Speicherbereich (8) gespeichert ist,
d) Aktivieren des Tauchmodus, wenn der Wert der Druckschwankung (dP) grösser ist als die Auslöseschwelle, oder andernfalls Fortführen des Verfahrens mit dem folgenden Schritt,
e) Berechnen des Wertes der Druckschwankung (dPi) zwischen den zwei letzten gemessenen Werten des Umgebungsdruckes mit einer dritten Frequenz (f3) und Vergleichen dieses Wertes der Druckschwankung (dPi) mit einem vorbestimmten Wert (S2), der in dem Speicherbereich (8) gespeichert oder auf der Basis von gemessenen Druckwerten bestimmt ist (dPm), wobei die Grösse (S2) kleiner ist als die Auslöseschwelle (S1 und die dritte Frequenz (f3) kleiner oder gleich der ersten Frequenz (f1) ist,
f) Wiederaufnahme des Verfahrens mit dem Schritt a), wenn der Wert der Druckschwankung (dPi) kleiner oder gleich der Grösse (S2) ist, oder andernfalls Implementieren einer Schleife zur Verifikation des Beginns eines Tauchvorgangs, welche folgende Operationen umfasst:
- Abspeichern des Wertes des Referenzdrucks (Pref) als Speicherwert des Referenzdrucks (Psauv),
- Wiederaufnahme der Schritte a) bis d) während einer vorbestimmten Zeitspanne (T), während der der gespeicherte Wert des Referenzdrucks (Pref) durch den Speicherwert des Referenzdrucks (Psauv) ersetzt wird, wenn der Tauchmodus in Schritt d) aktiviert worden ist,
- Wiederaufnahme der Schritte a) bis f) wenn die vorbestimmte Zeitspanne (T) abgelaufen ist.

2. Verfahren zur Detektion nach Anspruch 1, wobei die erste (f1) und die dritte (f3) Frequenz gleich sind.

3. Verfahren zur Detektion nach Anspruch 1 oder 2, welches zusätzliche Schritte a'), c'), d'), e') und f) umfasst, die jeweils identisch sind zu den Schritten a), c), d), e) et f), wobei die Durchführung der Schritte a'), c'), d'), e') et f) zwischen zwei aufeinander folgenden Durchführungen der Schritte a), c), d), e) und f) eingeschoben ist.

4. Verfahren zur Detektion nach einem der vorstehenden Ansprüche, wobei die erste Frequenz (f1) einen Wert besitzt, der im Wesentlichen zwischen 0,1 und 10 Hz liegt.

5. Verfahren zur Detektion nach einem der vorstehenden Ansprüche, wobei die zweite Frequenz (f2) einen Wert besitzt, der im Wesentlichen zwischen 0,001 und 0,04 Hz liegt.

6. Verfahren zur Detektion nach einem der vorstehenden Ansprüche, wobei der Wert der Auslöseschwelle einer Wassertiefe entspricht, die im Wesentlichen zwischen 0,2 und 1,5 Metern liegt.

7. Verfahren zur Detektion nach einem der vorstehenden Ansprüche, wobei der Wert der vorbestimmten Zeitspanne (T) vorzugsweise zwischen 2 und 10 Minuten liegt.

8. Verfahren zur Detektion nach einem der vorstehenden Ansprüche, wobei, wenn die Grösse auf der Basis der gemessenen Druckwerte bestimmt wird, der Schritt e) ferner einen Abspeichervorgang des Wertes der Druckschwankung (dPi) mit der ersten Frequenz (f1) umfasst, wobei wenigstens die drei letzten gespeicherten Werte der Druckschwankung (dPi-2, dPi-1, dPi) verwendet werden, um diese Grösse zu berechnen, und diese Grösse dem Ergebnis einer Berechnung eines Mittelwertes der Druckschwankung (dPm) über diese wenigsten drei letzten gespeicherten Werte entspricht.

9. Verfahren zur Detektion nach Anspruch 8, bei dem die Grösse auf der Basis der vier letzten abgespeicherten Werte der Druckschwankung (dPi-3, dPi-2, dPi-1, dPi) berechnet wird.
